(19) Europäisches Patentamt / European Patent Office / Office européen des brevets

(11) **EP 3 084 115 B1**

(12) **FASCICULE DE BREVET EUROPEEN**

(45) Date de publication et mention
de la délivrance du brevet:
**05.09.2018 Bulletin 2018/36**

(21) Numéro de dépôt: **14815732.4**

(22) Date de dépôt: **19.12.2014**

(51) Int Cl.:
***E21B 28/00*** *(2006.01)*    ***E21B 43/00*** *(2006.01)*

(86) Numéro de dépôt international:
**PCT/EP2014/078652**

(87) Numéro de publication internationale:
**WO 2015/091909 (25.06.2015 Gazette 2015/25)**

(54) **DISPOSITIF DE STIMULATION DE PUITS ET PROCÉDÉ DE DIAGNOSTIC D'UN TEL DISPOSITIF DE STIMULATION**

VORRICHTUNG ZUM STIMULIEREN VON BOHRLÖCHERN UND DIAGNOSEVERFAHREN FÜR SOLCH EINE STIMULATIONSVORRICHTUNG

DEVICE FOR STIMULATION OF WELLS AND DIAGNOSTIC METHOD FOR SUCH A STIMULATION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363230**

(43) Date de publication de la demande:
**26.10.2016 Bulletin 2016/43**

(73) Titulaire: **ENE29 S.à r.l.**
**1931 Luxembourg (LU)**

(72) Inventeurs:
• **DELCHAMBRE, Michael**
  **F-31100 Toulouse (FR)**
• **MONCHO, Salvador**
  **F-92240 Malakoff (FR)**
• **HORSOT, Xavier**
  **F-31470 Fonsorbes (FR)**

(74) Mandataire: **Ipside**
**6, Impasse Michel Labrousse**
**31100 Toulouse (FR)**

(56) Documents cités:
**EP-A2- 2 426 311     US-A- 4 084 638**
**US-A- 4 343 356**

## Description

## DOMAINE TECHNIQUE

La présente invention concerne un dispositif électrique de stimulation de puits et un procédé de diagnostic d'un tel dispositif de stimulation.

Par « stimulation de puits », on entend générer une onde de choc acoustique dans un puits naturel ou de forage. Une stimulation de puits permet notamment d'améliorer la production d'un puits d'extraction de ressource souterraine (pétrole, gaz naturel, eau, etc.), d'effectuer une étude sismologique en mesurant l'onde acoustique (par exemple au moyen d'un capteur acoustique en surface), de réaliser une fracturation de roche souterraine, etc.

## ÉTAT DE LA TECHNIQUE

Il est connu, dans le domaine de la stimulation de puits, d'utiliser un dispositif comportant un outil de forme allongée adapté à être inséré dans un puits obtenu par forage. De tels dispositifs de stimulation sont connus par exemple :

- du brevet US 4345650 et de la demande de brevet EP 2426311, qui décrivent un dispositif de stimulation mis en oeuvre pour améliorer la production d'un puits d'extraction de ressource souterraine,
- de la demande internationale de brevet WO9013830, qui décrit un dispositif de stimulation mis en oeuvre pour effectuer une étude sismologique,
- du brevet US4479680, qui décrit un dispositif de stimulation mis en oeuvre pour réaliser une fracturation de roche souterraine.

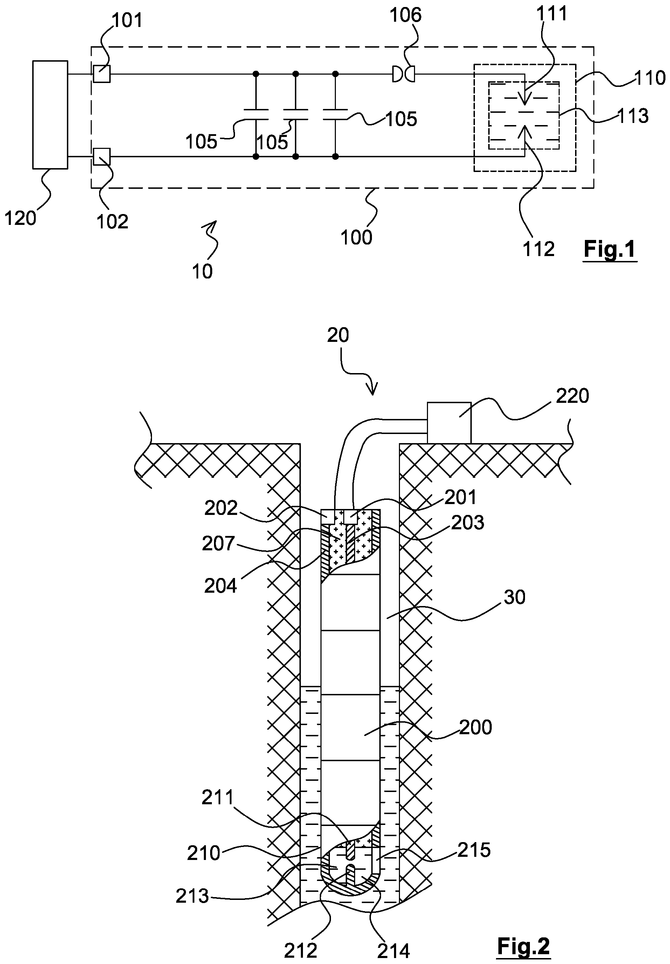

La figure 1 représente un schéma électrique d'un exemple de dispositif 10 de stimulation comportant un outil 100 selon l'art antérieur.

Tel qu'illustré par la figure 1, l'outil 100 comporte une tête de stimulation 110 se présentant sous la forme d'une cavité 113 fermée à l'intérieur de laquelle débouchent une première électrode 111 et une seconde électrode 112. La première électrode 111 et la seconde électrode 112 sont séparées par de l'eau confinée à l'intérieur de ladite cavité 113.

La première électrode 111 et la seconde électrode 112 sont reliées respectivement à une première borne 101 et une seconde borne 102 de l'outil 100, à l'extérieur de la cavité 113 de la tête de stimulation 110. L'outil 100 comporte en outre un ensemble d'éléments capacitifs 105 qui sont montés électriquement en parallèle entre eux et avec la tête de stimulation 110.

L'outil 100 illustré par la figure 1 comporte également un éclateur 106 agencé entre les éléments capacitifs 105 et la tête de stimulation 110. L'éclateur 106 comporte principalement deux états :

- un état ouvert dans lequel les éléments capacitifs 105 sont déconnectés de la tête de stimulation 110, de sorte qu'aucun courant électrique ne peut circuler entre lesdits éléments capacitifs 105 et ladite tête de stimulation 110,
- un état fermé dans lequel les éléments capacitifs 105 sont connectés à la tête de stimulation 110, de sorte qu'un courant électrique peut circuler entre lesdits éléments capacitifs 105 et ladite tête de stimulation 110.

Ainsi, en connectant une source électrique 120 à la première borne 101 et à la seconde borne 102 de l'outil 100, les éléments capacitifs 105 se chargent lorsque l'éclateur 106 est dans l'état ouvert, jusqu'à obtenir une tension prédéfinie aux bornes de l'ensemble desdits éléments capacitifs 105. L'éclateur 106 passe alors dans l'état fermé, et la tension aux bornes des éléments capacitifs est appliquée à la tête de stimulation 110. Les éléments capacitifs 105 se déchargent, à travers la tête de stimulation, en faisant circuler une impulsion de courant de forte intensité (pouvant dépasser la centaine de kilo-ampères) dans le fluide séparant la première électrode 111 de la seconde électrode 112. Cette impulsion de courant de forte intensité crée une onde de choc acoustique qui se propage dans le puits, par exemple par l'intermédiaire d'une paroi flexible de la cavité 113. Une telle onde de choc acoustique peut permettre, notamment, d'améliorer la production d'un puits d'extraction de ressource souterraine, d'effectuer une étude sismologique, de réaliser une fracturation de roche souterraine, etc.

Lors des opérations de stimulation d'un puits, l'outil 100 est inséré dans ledit puits avec la tête de stimulation 110 vers le bas, et est descendu jusqu'au point où la stimulation doit être effectuée. Une fois le point de stimulation atteint, le puits peut être stimulé par des charges / décharges successives des éléments capacitifs 105. Toutefois, un inconvénient des dispositifs de stimulation actuels réside dans le fait qu'aucun contrôle de l'état de la tête de stimulation n'est possible lorsque l'outil se trouve au fond du puits.

## EXPOSÉ DE L'INVENTION

La présente invention a pour objectif de proposer une architecture alternative pour un outil de dispositif de stimulation de puits.

En outre, la présente invention a également pour objectif de proposer une architecture qui permette de déterminer l'état de la tête de stimulation lorsque l'outil se trouve au fond du puits.

A cet effet, et selon un premier aspect, la présente invention concerne un dispositif de stimulation de puits selon la revendication 1. Ainsi, le dispositif de stimulation selon l'invention diffère notamment des dispositifs connus en ce que l'élément capacitif est chargé en série avec la tête de stimulation. Ainsi, il est possible avec le dispositif de stimulation selon l'invention de diagnostiquer l'état de la tête de stimulation.

En effet, en cas de détérioration de la tête de stimulation, par exemple en cas de déchirure d'une paroi flexible de la cavité, des éléments extérieurs se mélangent au fluide et en changent les propriétés électriques. Du fait que l'élément capacitif est chargé en série avec la tête de stimulation, un courant électrique circule dans ladite tête de stimulation lors de la charge de l'élément capacitif, de sorte qu'il est possible de détecter une modification des propriétés électriques du fluide à l'intérieur de la cavité.

Dans des modes particuliers de réalisation, le dispositif de stimulation de puits peut comporter l'une ou plusieurs des caractéristiques suivantes, prises isolément ou selon toutes les combinaisons techniquement possibles.

Dans des modes particuliers de réalisation, le dispositif de stimulation comporte des moyens de diagnostic adaptés à déterminer un état de la tête de stimulation en fonction d'un paramètre représentatif de la résistance de la tête de stimulation.

Dans des modes particuliers de réalisation, la source électrique est une source de courant, de préférence une source adaptée à fournir un courant d'intensité constante lors de la charge du ou des éléments capacitifs.

Dans des modes particuliers de réalisation, le dispositif de stimulation comporte un élément résistif électriquement en parallèle avec la tête de stimulation et, dans l'état de charge, en série avec l'élément capacitif.

De telles dispositions permettent, en cas de détérioration de la tête de stimulation, telle qu'une déchirure de la paroi flexible de la cavité, d'assurer une intensité minimale du courant de décharge de l'élément capacitif, le cas échéant par l'intermédiaire de l'élément résistif. En effet, en cas de détérioration, la résistance de la tête de stimulation peut augmenter fortement, mais la résistance équivalente reste toujours inférieure à la résistance de l'élément résistif. Par conséquent, l'élément capacitif peut toujours se décharger au moins par l'intermédiaire de l'élément résistif, de sorte que le risque de remonter à la surface un outil dont l'élément capacitif ne serait pas complètement déchargé est fortement réduit. La sécurité des opérateurs manipulant l'outil est donc améliorée.

Dans des modes particuliers de réalisation, l'élément résistif est de résistance au moins deux fois supérieure à la résistance théorique du fluide séparant la première électrode de la seconde électrode.

Dans des modes particuliers de réalisation, la source électrique étant une source de courant d'intensité $I_C$ et le passage de l'état de charge à l'état de décharge étant effectué lorsque la tension entre la première borne de l'élément capacitif et la seconde électrode de la tête de stimulation atteint une valeur limite supérieure $V_0$ prédéfinie, l'élément résistif est de résistance $R_S$ telle que la tension $R_S \cdot I_C$ est inférieure à $V_0$.

Dans des modes particuliers de réalisation, le commutateur agencé entre la première borne de l'élément capacitif et la seconde electrode est un éclateur. Selon un second aspect, la présente invention concerne un procédé de diagnostic d'un dispositif électrique de stimulation de puits selon l'un quelconque des modes de réalisation de l'invention, comportant des étapes de :

- détermination d'un paramètre représentatif de la résistance de la tête de stimulation lorsque l'outil est dans l'état de charge dans lequel, l'élément capacitif et la tête de stimulation étant électriquement en série, la source électrique charge l'élément capacitif à travers ladite tête de stimulation,
- détermination d'un état de la tête de stimulation en fonction dudit paramètre.

Dans des modes particuliers de mise en oeuvre, la détermination du paramètre correspond à une mesure de la puissance fournie à l'outil par la source électrique et/ou une mesure du temps nécessaire pour obtenir une tension de valeur prédéfinie entre la première borne de l'élément capacitif et la seconde électrode de la tête de stimulation.

## PRÉSENTATION DES FIGURES

L'invention sera mieux comprise à la lecture de la description suivante, donnée à titre d'exemple nullement limitatif, et faite en se référant aux figures qui représentent :

- Figure 1 : déjà décrite, un schéma électrique d'un exemple de réalisation d'un dispositif de stimulation de puits selon l'art antérieur,
- Figure 2 : une vue en demi-coupe d'un dispositif de stimulation en position dans un puits,
- Figures 3 et 4 : des schémas électriques de variantes de réalisation de dispositifs de stimulation selon l'invention,
- Figure 5 : des diagrammes temporels représentant un exemple de mise en oeuvre d'un procédé de diagnostic d'une tête de stimulation d'un dispositif de stimulation selon l'invention.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

La figure 2 représente schématiquement un exemple de mise en oeuvre d'un dispositif 20 de stimulation de puits selon l'invention.

Dans la suite de la description, on se place de manière non limitative dans le cas d'un dispositif 20 de stimulation mis en oeuvre pour améliorer la production d'un puits d'extraction de ressource souterraine. Toutefois, et tel qu'indiqué précédemment, on entend de manière générale, par « stimulation de puits », générer une onde de choc acoustique dans un puits naturel ou de forage. Une telle stimulation de puits peut être mise en oeuvre pour améliorer la production d'un puits d'extraction de ressource souterraine, mais également pour effectuer une étude sismologique, pour réaliser une fracturation de roche souterraine, etc.

Tel qu'illustré par la figure 2, le dispositif 20 de stimulation comporte un outil 200, de forme allongée, adapté à être introduit dans un puits 30 d'extraction obtenu par forage. Dans des modes particuliers de réalisation, l'outil 200 peut être formé par une pluralité de tronçons assemblés bout à bout de manière réversible.

Plus particulièrement, la figure 2 représente une vue en demi-coupe de l'outil 200, dans laquelle les deux extrémités dudit outil 200 sont représentées en coupe. L'outil 200 comporte notamment, au niveau d'une première extrémité, une tête de stimulation 210, introduite vers le bas dans le puits 30 d'extraction, et une seconde extrémité opposée à ladite tête de stimulation 210.

La tête de stimulation 210 comporte une cavité 213 fermée à l'intérieur de laquelle débouchent une première électrode 211 et une seconde électrode 212. La première électrode 211 et la seconde électrode 212 sont séparées par un fluide 214 confiné à l'intérieur de la cavité 213. La cavité 213 est fermée notamment par une paroi 215 flexible séparant le fluide 214, à l'intérieur de ladite cavité 213, et la ressource souterraine, à l'extérieur de ladite cavité. Le fluide 214 est électriquement conducteur et peut être considéré comme étant un élément résistif. Ledit fluide est par exemple un liquide tel que de l'eau, de résistance de l'ordre de 1000 ohm. Rien n'exclut, suivant d'autres exemples, d'avoir une tête de stimulation 210 avec une cavité ouverte, auquel cas le fluide est le fluide contenu en fond de puits.

Dans la suite de la description, on se place dans le cas où la cavité 213 est fermée. La valeur théorique de la résistance du fluide 214, c'est-à-dire la résistance dudit fluide en l'absence de détérioration de la tête de stimulation 210, est désignée ci-après par $R_F$.

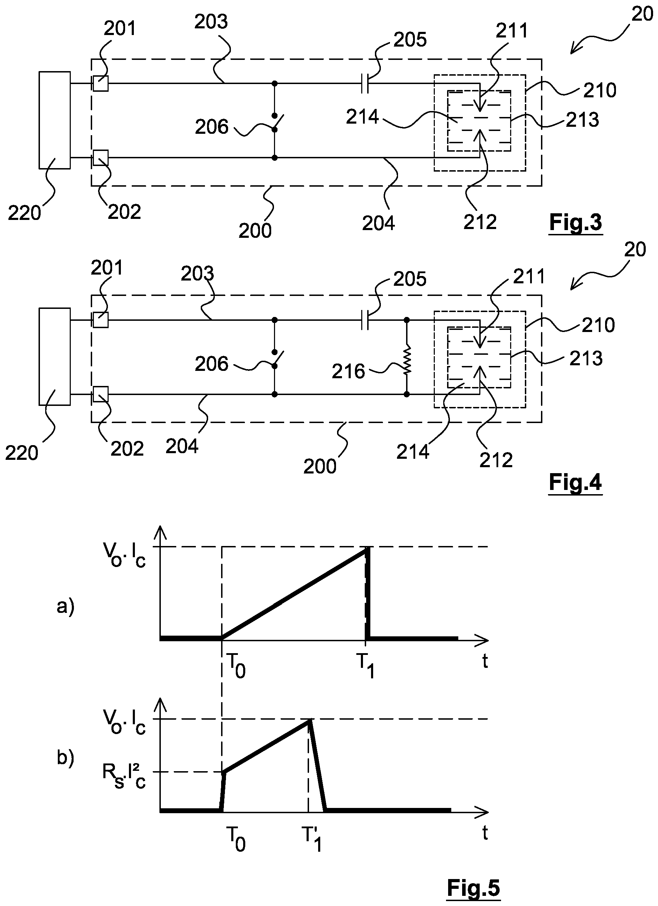

L'outil 200 comporte également, par exemple au niveau de la seconde extrémité, une première borne 201 et une seconde borne 202. La première borne 201 est reliée à la première électrode 211 par l'intermédiaire d'un premier circuit 203, et la seconde borne 202 est reliée à la seconde électrode 212 par l'intermédiaire d'un second circuit 204. Dans l'exemple non limitatif illustré par la figure 3, le premier circuit 203, par exemple une tige en laiton, correspond à une âme centrale de l'outil 200, tandis que le second circuit 204, par exemple en acier, correspond à une paroi périphérique de l'outil 200. Le premier circuit 203 et le second circuit 204 sont de préférence séparés par une couche 207 de matériau électriquement isolant entourant le premier circuit 203, à l'exception des zones dans lesquelles ledit premier circuit 203 et ledit second circuit 204 sont reliés par des composants électriques discutés ci-après.

Le dispositif 20 de stimulation comporte une source électrique 220 connectée à la première borne 201 et à la seconde borne 202 de l'outil 200. Dans la suite de la description, on se place dans le cas où la source électrique 220 est une source de courant d'intensité $I_C$ constante. Cet exemple n'est pas limitatif et, suivant d'autres exemples, la source électrique peut être une source de courant d'intensité variable au cours du temps, une source de tension, etc.

Dans l'exemple non limitatif illustré par la figure 2, la source électrique 220 est externe à l'outil 200 et est connectée à la première borne 201 et à la seconde borne 202 par l'intermédiaire d'un câble électrique. Rien n'exclut, suivant d'autres modes de réalisation, d'avoir par exemple une source électrique 220 intégrée dans l'outil 200. Suivant d'autres exemples de réalisation, la source électrique 220 peut également être en partie seulement externe à l'outil 200, en étant distribuée en deux parties reliées par un câble électrique : une première partie externe à l'outil 200 et une seconde partie intégrée dans l'outil 200 et connectée à la première borne 201 et à la seconde borne 202 dudit outil 200. Par exemple, la première partie de la source électrique 220 est une source de tension constante, tandis que la seconde partie est un convertisseur adapté à fournir un courant d'intensité $I_C$ constante à l'outil 200 à partir de la tension constante reçue de la première partie de la source électrique 220.

La figure 3 représente un schéma électrique des principaux composants électriques d'un mode particulier de réalisation de l'outil 200. Pour des raisons de clarté, l'agencement desdits composants électriques, par exemple l'agencement du premier circuit 203 en tant qu'âme centrale de l'outil 200 et l'agencement du second circuit 204 en tant que paroi périphérique dudit outil 200, n'est pas pris en compte sur la figure 3.

Tel qu'illustré par la figure 3, le premier circuit 203 de l'outil 200 comporte un élément capacitif 205. Le dispositif 20 de stimulation comporte en outre des moyens de commutation adaptés à placer l'outil 200 dans au moins deux états :

- un état de charge dans lequel une première borne de l'élément capacitif 205 est connectée à la première borne 201 de l'outil 200 et déconnectée de la seconde électrode 212, et dans lequel une seconde borne de l'élément capacitif est connectée à la première électrode 211,

- un état de décharge dans lequel la première borne de l'élément capacitif 205 est connectée à la seconde électrode 212, et dans lequel la seconde borne de l'élément capacitif 205 est connectée à la première électrode 211.

Dans l'exemple non limitatif illustré par la figure 3, la première borne de l'élément capacitif 205 est connectée directement à la première borne 201 de l'outil 200, et la seconde borne dudit élément capacitif 205 est connectée directement à la première électrode 211 de la tête de stimulation 210. On entend par « connecté à » qu'un courant électrique peut circuler entre les éléments considérés. Par « connecté directement à », on entend que les éléments considérés sont connectés sans composant électrique intermédiaire.

En outre, les moyens de commutation comportent un commutateur 206 connecté d'une part à un point du premier circuit 203 situé entre la première borne 201 de l'outil 200 et l'élément capacitif 205 et, d'autre part, un point du second circuit 204 situé entre la seconde borne 202 de l'outil 200 et la seconde électrode 212 de la tête de stimulation 210. Le commutateur 206 comporte de manière conventionnelle un état ouvert, dans lequel aucun courant électrique ne circule entre les bornes dudit commutateur 206, et un état fermé dans lequel un courant électrique peut circuler entre lesdites bornes dudit commutateur 206.

Lorsque la source électrique 220 est connectée à la première borne 201 et à la seconde borne 202 de l'outil 200, on comprend donc que :

- lorsque le commutateur 206 est à l'état ouvert : l'élément capacitif 205 et la tête de stimulation 210 sont électriquement en série entre la première borne 201 et la seconde borne 202 de l'outil 200, de sorte que ladite source électrique 220 charge l'élément capacitif 205 à travers la tête de stimulation 210,
- lorsque le commutateur 206 est à l'état fermé : l'élément capacitif 205 se décharge à travers la tête de stimulation 210.

Le passage du commutateur de l'état ouvert à l'état fermé est par exemple effectué lorsqu'une condition prédéfinie de décharge est obtenue. Par exemple, ladite condition prédéfinie est obtenue lorsque la tension aux bornes du commutateur 206 ou de l'élément capacitif 205 atteint une valeur limite supérieure prédéfinie. Dans un tel cas, le commutateur 206 est avantageusement un éclateur dont la tension de claquage est choisie égale à ladite valeur limite supérieure prédéfinie, de sorte que l'éclateur passe automatiquement à l'état fermé dès que la tension à ses bornes atteint ladite valeur limite supérieure.

D'autres exemples de réalisation sont cependant possibles. Suivant d'autres exemples non limitatifs, le dispositif 20 de stimulation peut comporter un module de commande qui contrôle le commutateur 206 en fonction de mesures de la tension aux bornes dudit commutateur 206 ou aux bornes de l'élément capacitif 205.

Tel qu'indiqué précédemment, dans l'état de charge, la source électrique 220 charge l'élément capacitif 205 à travers la tête de stimulation 210. Du fait que la source électrique 220 fournit dans l'exemple considéré un courant d'intensité $I_C$ constante, la tension aux bornes de l'élément capacitif 205 augmente linéairement, tandis que la tension entre la première électrode 211 et la seconde électrode 212 est sensiblement constante, égale à $R_F \cdot I_C$. Par exemple, la décharge de l'élément capacitif 205 est déclenchée lorsque la tension aux bornes du commutateur 206 atteint une valeur limite supérieure $V_0$ prédéfinie, qui correspond à une tension $V_1$ aux bornes de l'élément capacitif 205 égale à :

$$V_1 = V_0 - R_F \cdot I_C$$

Lors de la décharge, le courant de décharge circulant entre la première électrode 211 et la seconde électrode 212 est donc d'intensité $I_D$ égale à $V_1/R_F$. Les différents composants électriques du dispositif 20 de stimulation sont de préférence configurés de sorte que l'intensité $I_D$ est de l'ordre de quelques dizaines de kilo-ampères à quelques centaines de kilo-ampères. La circulation d'un tel courant de décharge provoque une onde de choc acoustique à l'intérieur de la cavité 213, qui se propage dans le puits 30 d'extraction par l'intermédiaire notamment de la paroi 215 flexible.

La figure 4 représente une variante préférée de réalisation de l'outil 200 de la figure 3, dans laquelle l'outil 200 comporte en outre un élément résistif 216 monté en parallèle avec la tête de stimulation 210, entre un point du premier circuit 203 situé entre l'élément capacitif 205 et la première électrode 211, et un point du second circuit 204 situé entre la seconde électrode 212 et le commutateur 206. L'élément résistif 216 est de résistance $R_S$ au moins deux fois supérieure à la valeur théorique $R_F$ de la résistance du fluide 214 séparant la première électrode 211 de la seconde électrode 212.

Du fait que la résistance $R_S$ de l'élément résistif 216 est au moins deux fois supérieure à la valeur théorique $R_F$ de la résistance du fluide 214, on assure que, en l'absence de détérioration, le courant de charge et le courant de décharge de l'élément capacitif 205 circulent principalement par l'intermédiaire du fluide 214. Dans des modes préférés de réalisation, la résistance $R_S$ de l'élément résistif 216 est au moins dix fois, voire au moins cent fois supérieure à ladite valeur théorique $R_F$ de la résistance du fluide 214. Ainsi, l'intensité du courant circulant dans l'élément résistif 216 est significativement inférieure à l'intensité du courant circulant dans la tête de stimulation 210.

L'élément résistif 216 permet d'assurer que l'intensité du courant de décharge de l'élément capacitif 205 est toujours supérieure à une valeur limite inférieure prédéfinie, même en cas de détérioration de la tête de stimulation. En effet, dans le cas par exemple d'une déchirure de la paroi 215 flexible, des éléments extérieurs, provenant du puits d'extraction, peuvent s'introduire dans la cavité 213 et modifier la résistance du fluide 214. Typiquement, la résistance du fluide 214 peut augmenter jusqu'à atteindre une valeur $R_Z$ significativement supérieure à la valeur théorique $R_F$. Dans un tel cas, la décharge de l'élément capacitif 205 est beaucoup plus lente voire impossible. Grâce à l'élément résistif 216 monté en parallèle avec la tête de stimulation 210, la résistance équivalente de l'ensemble constitué par ledit élément résistif 216 et la tête de stimulation 210 est donc toujours inférieure à $R_S$, de sorte que l'élément capacitif 205 peut toujours se décharger.

Tel qu'indiqué précédemment, l'élément capacitif 205 de l'outil 200 est chargé en série avec la tête de stimulation 210. Par conséquent, lors de la charge, un courant électrique circule dans ladite tête de stimulation 210, entre la première électrode 211 et la seconde électrode 212.

De la sorte, toute modification des propriétés électriques de la tête de stimulation 210, et plus particulièrement de la résistance du fluide 214 (passage de la valeur théorique $R_F$ à la valeur $R_Z$), peut en principe être détectée en observant un paramètre représentatif de ladite résistance dudit fluide 214. L'analyse dudit paramètre lorsque l'outil 200 est dans l'état de charge permet donc de déterminer un état de la tête de stimulation 210, par exemple détecter un comportement anormal susceptible d'être provoqué par une déchirure de la paroi 215 flexible de la cavité 213.

De préférence, le paramètre observé est la puissance fournie à l'outil 200 par la source électrique 220. L'observation de la puissance est avantageuse, dans le cas d'une source électrique 220 au moins en partie externe à l'outil 200, dans la mesure où elle peut être effectuée à distance de l'outil 200 (en surface), sans avoir à avoir à ajouter de capteur dédié de tension et/ou de courant dans ledit outil 200.

La figure 5 représente schématiquement le comportement temporel de la puissance fournie par la source électrique 220 à l'outil 200, dans le cas du dispositif 20 de stimulation illustré par la figure 4, et dans le cas où le passage de l'état de charge à l'état de décharge est effectué lorsque la tension aux bornes de le commutateur 206 atteint une valeur limite supérieure $V_0$ prédéfinie (ou de manière équivalente : la puissance fournie par la source électrique atteint une valeur limite supérieure $V_0 \cdot I_C$). On se place en outre dans le cas où la valeur théorique $R_F$ de la résistance du fluide est très inférieure à la résistance $R_S$ de l'élément résistif 216, et dans le cas où la valeur $R_Z$ de la résistance du fluide en cas de détérioration est très supérieure à la résistance $R_S$ dudit l'élément résistif. Par conséquent, en l'absence de détérioration, la résistance équivalente de l'ensemble constitué par l'élément résistif 216 et la tête de stimulation 210 est sensiblement égale à $R_F$, tandis qu'elle est sensiblement égale à $R_S$ en cas de détérioration.

La partie a) de la figure 5 correspond au cas où la tête de stimulation 210 n'est pas détériorée. La puissance dissipée dans l'ensemble constitué par la tête de stimulation 210 et l'élément résistif 216, au cours de la charge, est par conséquent égale à $R_F \cdot I_C^2$, et est considérée comme négligeable par rapport à la puissance $V_0 \cdot I_C$. Sur la partie a) de la figure 5, la charge de l'élément capacitif 205 débute à l'instant $T_0$. A cet instant, la puissance fournie à l'élément capacitif 205 est sensiblement nulle, tout comme la puissance fournie à la tête de stimulation 210. La puissance fournie par la source électrique 220 augmente ensuite progressivement jusqu'à atteindre, à un instant $T_1$, la puissance $V_0 \cdot I_C$ pour laquelle le commutateur 206 passe de l'état ouvert à l'état fermé. L'élément capacitif 205 se décharge alors de manière quasi instantanée à travers la tête de stimulation 210.

La partie b) de la figure 5 correspond au cas où la tête de stimulation 210 est détériorée, de sorte que la tête de stimulation 210 est de résistance $R_Z$ très supérieure à la résistance $R_S$ de l'élément résistif 216. La puissance dissipée dans l'ensemble constitué par la tête de stimulation 210 et l'élément résistif 216, au cours de la charge, est par conséquent égale à $R_S \cdot I_C^2$, et n'est pas négligeable par rapport à la puissance $V_0 \cdot I_C$. Sur la partie b) de la figure 5, la charge de l'élément capacitif 205 débute à l'instant $T_0$. A cet instant, la puissance fournie à l'élément capacitif 205 est sensiblement nulle, et la source électrique 220 doit fournir une puissance $R_S \cdot I_C^2$ à l'élément résistif 216. La puissance fournie par la source électrique 220 augmente ensuite progressivement jusqu'à atteindre à un instant $T'_1$, la puissance $V_0 \cdot I_C$ pour laquelle le commutateur 206 passe de l'état ouvert à l'état fermé. L'élément capacitif 205 se décharge alors à travers l'élément résistif 216, plus lentement que dans la partie a) de la figure 5.

On comprend donc que l'observation de la puissance fournie par la source électrique 220 permet de déterminer l'état de la tête de stimulation 210. Par exemple, si au début de la charge, à l'instant $T_0$, la puissance fournie augmente subitement (partie b), la tête de stimulation est vraisemblablement détériorée. Une telle augmentation subite de la puissance fournie pourra également être détectée dès lors que la résistance $R_S$ de l'élément résistif 216 est au moins deux fois supérieure à la valeur théorique $R_F$. En outre, on constate que la durée de charge ($T'_1 - T_0$) en cas de détérioration est inférieure à la durée de charge ($T_1 - T_0$) en l'absence de détérioration. Par conséquent, il est également possible de déterminer l'état de la tête de stimulation 210 en comparant la durée de charge réelle à une durée de référence prédéfinie.

Il est à noter que la détermination de l'état de la tête de stimulation 210 est également possible dans le cas du dispositif 20 de stimulation de la figure 3. En effet, en cas de détérioration, la tête de stimulation 210 est alors de résistance $R_Z$. Par conséquent, à l'instant $T_0$, la puissance fournie serait en théorie égale à $R_Z \cdot I_C^2$ au lieu de $R_F \cdot I_C^2$, de sorte que l'état de la tête de stimulation 210 peut être déterminé de manière analogue en fonction de la puissance fournie à l'instant $T_0$, ou encore en fonction de la durée de charge.

Toutefois, la puissance $R_Z \cdot I_C^2$ peut être très élevée et conduire à une détérioration de certains composants électroniques. En outre, la puissance $R_Z \cdot I_C^2$ peut être supérieure à la puissance $V_0 \cdot I_C$, ce qui rend impossible toute charge de l'élément capacitif. La présence de l'élément résistif 216, en particulier de résistance $R_S$ telle que la puissance $R_S \cdot I_C^2$ est inférieure à la puissance $V_0 \cdot I_C$ (ou de manière équivalente telle que la tension $R_S \cdot I_C$ est inférieure à la tension $V_0$), comme c'est le cas sur la figure 5, permet d'éviter toute détérioration des composants électroniques et tout blocage de l'outil 200.

Il est également à noter que la détermination de l'état de la tête de stimulation 210 est possible dans le cas où la cavité 213 est ouverte, dès lors que l'on connaît une valeur théorique $R_F$ du fluide contenu en fond de puits. En effet, il sera alors possible de détecter toute variation de la résistance du fluide en fond de puits par rapport à ladite valeur théorique $R_F$, liée par exemple au mélange d'éléments extérieurs avec ledit fluide suite à la génération d'une onde de choc acoustique.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant la puissance fournie par la source électrique 220 comme paramètre observé pour diagnostiquer l'état de la tête de stimulation 210. D'autres paramètres représentatifs de la résistance de la tête de stimulation 210 sont possibles, comme par exemple la tension aux bornes de la tête de stimulation 210 lors de la charge, la tension aux bornes du commutateur 206 lors de la charge, la durée de ladite charge, etc.

La description ci-avant illustre clairement que par ses différentes caractéristiques et leurs avantages, la présente invention atteint les objectifs qu'elle s'était fixés. En particulier, un dispositif 20 de stimulation selon l'invention permet de contrôler l'état de la tête de stimulation 210 au fond du puits 30 d'extraction. L'état de la tête de stimulation 210 peut être déterminé de manière automatique par des moyens de diagnostic du dispositif 20 de stimulation, ou par un opérateur qui observerait par exemple la puissance fournie au début de la charge, la durée de ladite charge, etc.

### Revendications

1. Dispositif (20) de stimulation de puits comportant une source électrique (220) connectée à une première borne (201) et une seconde borne (202) d'un outil (200), ledit outil (200) comportant un élément capacitif (205) et une tête de stimulation (210), ladite tête de stimulation comprenant une cavité (213) à l'intérieur de laquelle sont agencées une première électrode (211) et une seconde électrode (212) séparées par un fluide (214) électriquement conducteur, ledit dispositif étant **caractérisé en ce qu'il** comporte des moyens de commutation adaptés à placer l'outil (200) dans au moins deux états :

   - un état de charge dans lequel une première borne de l'élément capacitif (205) est connectée à la première borne (201) de l'outil (200) et déconnectée de la seconde électrode (212), et dans lequel une seconde borne de l'élément capacitif est connectée à la première électrode (211), de sorte que, l'élément capacitif (205) et la tête de stimulation (210) étant électriquement en série entre la première borne (201) et la seconde borne (202) de l'outil, la source électrique charge l'élément capacitif à travers la tête de stimulation,

   - un état de décharge dans lequel la première borne de l'élément capacitif (205) est connectée à la seconde électrode (212), et dans lequel la seconde borne de l'élément capacitif (205) est connectée à la première électrode (211), de sorte que l'élément capacitif se décharge à travers la tête de stimulation (210),

   lesdits moyens de commutation comportant un commutateur (206) agencé entre la première borne de l'élément capacitif (205) et la seconde électrode (212), ledit commutateur étant configuré pour être placé dans un état ouvert pour placer l'outil (200) dans l'état de charge et pour être placé dans un état fermé pour placer ledit outil (200) dans l'état de décharge.

2. Dispositif (20) selon la revendication 1, **caractérisé en ce qu'**il comporte des moyens de diagnostic adaptés à déterminer un état de la tête de stimulation (210) en fonction d'un paramètre représentatif de la résistance du fluide séparant la première électrode (211) de la seconde électrode (212).

3. Dispositif (20) selon l'une des revendications précédentes, **caractérisé en ce que** la source électrique (220) est une source de courant.

4. Dispositif (20) selon l'une des revendications précédentes, **caractérisé en ce qu'**il comporte un élément résistif (216) électriquement en parallèle avec la tête de stimulation (210) et, dans l'état de charge, en série avec l'élément capacitif (205).

5. Dispositif (20) selon la revendication 4, **caractérisé en ce que** l'élément résistif (216) est de résistance au moins deux fois supérieure à une valeur théorique $R_F$ de la résistance du fluide séparant la première électrode (211) de la seconde électrode (212).

6. Dispositif (20) selon l'une des revendications 4 à 5, **caractérisé en ce que**, la source électrique (220) étant une source de courant d'intensité $I_C$ et le passage de l'état de charge à l'état de décharge étant effectué lorsque la tension entre la première borne de l'élément capacitif (205) et la seconde électrode (212) de la tête de stimulation (210) atteint une valeur limite supérieure $V_0$ prédéfinie, l'élément résistif (216) est de résistance $R_S$ telle que la tension $R_S \cdot I_C$ est inférieure à $V_0$.

7. Dispositif (10) selon l'une des revendications précédentes, **caractérisé en ce que** le commutateur (206) agencé entre la première borne de l'élément capacitif (205) et la seconde électrode (212) est un éclateur.

8. Dispositif (20) selon l'une des revendications précédentes, **caractérisé en ce que** l'outil (200) est formé par une pluralité de tronçons assemblés bout à bout de manière réversible.

9. Procédé de diagnostic d'un dispositif (20) électrique de stimulation de puits selon l'une des revendications précédentes, **caractérisé en ce qu'**il comporte des étapes de :

    - détermination d'un paramètre représentatif de la résistance de la tête de stimulation (210) lorsque l'outil (200) est dans l'état de charge dans lequel, l'élément capacitif (205) et la tête de stimulation (210) étant électriquement en série, la source électrique (220) charge l'élément capacitif (205) à travers ladite tête de stimulation (210),
    - détermination d'un état de la tête de stimulation (210) en fonction dudit paramètre.

10. Procédé selon la revendication 9, **caractérisé en ce que** la détermination du paramètre correspond à une mesure de la puissance fournie par la source électrique (220) et/ou une mesure du temps nécessaire pour obtenir une tension de valeur prédéfinie entre la première borne de l'élément capacitif (205) et la seconde électrode (212) de la tête de stimulation (210).

**Patentansprüche**

1. Vorrichtung (20) zum Stimulieren von Bohrlöchern, umfassend eine elektrische Quelle (220), die an eine erste Klemme (201) und eine zweite Klemme (202) eines Werkzeugs (200) angeschlossen ist, wobei das Werkzeug (200) ein kapazitives Element (205) und einen Stimulierungskopf (210) umfasst, wobei der Stimulierungskopf einen Hohlraum (213) umfasst, in dem eine erste Elektrode (211) und eine zweite Elektrode (212) angeordnet sind, die durch ein elektrisch leitendes Fluid (214) getrennt sind, wobei die Vorrichtung **dadurch gekennzeichnet ist, dass** sie Umschaltmittel umfasst, die geeignet sind, das Werkzeug (200) in mindestens zwei Zuständen anzuordnen:

    - einem Ladezustand, in dem eine erste Klemme des kapazitiven Elements (205) an die erste Klemme (201) des Werkzeugs (200) angeschlossen und von der zweiten Elektrode (212) getrennt ist, und in dem eine zweite Klemme des kapazitiven Elements an die erste Elektrode (211) angeschlossen ist, so dass, wobei das kapazitive Element (205) und der Stimulierungskopf (210) elektrisch zwischen der ersten Klemme (201) und der zweiten Klemme (202) des Werkzeugs in Serie geschaltet sind, die elektrische Quelle das kapazitive Element über den Stimulierungskopf lädt,
    - einem Entladezustand, in dem die erste Klemme des kapazitiven Elements (205) an die zweite Elektrode (212) angeschlossen ist, und in dem die zweite Klemme des kapazitiven Elements (205) an die erste Elektrode (211) angeschlossen ist, so dass sich das kapazitive Element über den Stimulierungskopf (210) entlädt,

wobei die Umschaltmittel einen Schalter (206) umfassen, der zwischen der ersten Klemme des kapazitiven Elements (205) und der zweiten Elektrode (212) angeordnet ist, wobei der Schalter konfiguriert ist, um in einem offenen Zustand angeordnet zu werden, um das Werkzeug (200) im Ladezustand anzuordnen, und um in einem geschlossenen Zustand angeordnet zu werden, um das Werkzeug (200) im Entladezustand anzuordnen.

2. Vorrichtung (20) nach Anspruch 1, **dadurch gekennzeichnet, dass** sie Diagnosemittel umfasst, die geeignet sind, einen Zustand des Stimulierungskopfes (210) in Abhängigkeit von einem Parameter, der für den Widerstand des Fluids, das die erste Elektrode (211) von der zweiten Elektrode (212) trennt, repräsentativ ist, zu bestimmen.

3. Vorrichtung (20) nach einem der vorhergehenden Ansprüche, **dadurch gekennzeichnet, dass** die elektrische Quelle (220) eine Stromquelle ist.

4. Vorrichtung (20) nach einem der vorhergehenden Ansprüche, **dadurch gekennzeichnet, dass** sie ein elektrisches Widerstandselement (216), das mit dem Stimulierungskopf (210) parallel und im Ladezustand mit dem kapazitiven Element (205) in Serie geschaltet ist, umfasst.

5. Vorrichtung (20) nach Anspruch 4, **dadurch gekennzeichnet, dass** das Widerstandselement (216) einen mindestens zweimal größeren Widerstand als ein theoretischer Wert $R_F$ des Widerstands des Fluids, das die erste Elektrode (211) von der zweiten Elektrode (212) trennt, aufweist.

6. Vorrichtung (20) nach einem der Ansprüche 4 bis 5, **dadurch gekennzeichnet, dass**, wobei die elektrische Quelle (220) eine Stromquelle mit der Stromstärke $I_C$ ist, und der Übergang vom Ladezustand in den Entladezustand erfolgt, wenn die Spannung zwischen der ersten Klemme des kapazitiven Elements (205) und der zweiten Elektrode (212) des Stimulierungskopfes (210) einen vordefinierten Grenzwert über $V_0$ erreicht, das Widerstandselement (216) einen derartigen Widerstand $R_S$ aufweist, dass die Spannung $R_S \cdot I_C$ kleiner als $V_0$ ist.

7. Vorrichtung (10) nach einem der vorhergehenden Ansprüche, **dadurch gekennzeichnet, dass** der Schalter (206), der zwischen der ersten Klemme des kapazitiven Elements (205) und der zweiten Elektrode (212) angeordnet ist, eine Funkenstrecke ist.

8. Vorrichtung (20) nach einem der vorhergehenden Ansprüche, **dadurch gekennzeichnet, dass** das Werkzeug (200) von einer Vielzahl von Abschnitten gebildet ist, die Stoß an Stoß auf reversible Weise zusammengefügt sind.

9. Diagnoseverfahren für eine elektrische Stimulierungsvorrichtung (20) von Bohrlöchern nach einem der vorhergehenden Ansprüche, **dadurch gekennzeichnet, dass** es die folgenden Schritte umfasst:

   - Bestimmung eines Parameters, der für den Widerstand des Stimulierungskopfes (210) repräsentativ ist, wenn das Werkzeug (200) im Ladezustand ist, in dem, wobei das kapazitive Element (205) und der Stimulierungskopf (210) elektrisch in Serie geschaltet sind, die elektrische Quelle (220) das kapazitive Element (205) über den Stimulierungskopf (210) lädt,
   - Bestimmung eines Zustands des Stimulierungskopfes (210) in Abhängigkeit von dem Parameter.

10. Verfahren nach Anspruch 9, **dadurch gekennzeichnet, dass** die Bestimmung des Parameters einem Maß der von der elektrischen Quelle (220) gelieferten Leistung und/oder einem Maß der erforderlichen Zeit für den Erhalt einer Spannung mit einem vordefinierten Wert zwischen der ersten Klemme des kapazitiven Elements (205) und der zweiten Elektrode (212) des Stimulierungskopfes (210) entspricht.

**Claims**

1. A well stimulation device (20) comprising a power source (220) connected to a first terminal (201) and a second terminal (202) of a tool (200), said tool (200) comprising a capacitive element (205) and a stimulation head (210), said stimulation head comprising a cavity (213) inside of which are arranged a first electrode (211) and a second electrode (212) separated by a fluid (214) electrically conductive, said device being **characterized in that** it comprises switching means adapted to place the tool (200) in at least two states:

   - a charging state wherein a first terminal of the capacitive element (205) is connected to the first terminal (201) of the tool (200) and disconnected from the second electrode (212), and wherein a second terminal of the capacitive element is connected to the first electrode (211), so that, the capacitive element (205) and the stimulation head (210) being electrically in series between the first terminal (201) and the second terminal (202) of the tool, the power source charges the capacitive element through the stimulation head,
   - a discharging state wherein the first terminal of the capacitive element (205) is connected to the second electrode (212), and wherein the second terminal of the capacitive element (205) is connected to the first electrode (211), so that the capacitive element discharges through the stimulation head (210),

   said switching means comprising a switch (206) arranged between the first terminal of the capacitive element (205) and the second electrode (212), said switch being configured to be placed in an open state to place the tool (200) in the charging state and to be placed in a closed state to place said tool (200) in the discharging state.

2. The device (20) as claimed in claim 1, **characterized in that** it comprises diagnostic means adapted to determine a state of the stimulation head (210) according to a parameter representative of the resistance of the fluid separating the first electrode (211) from the second electrode (212).

3. The device (20) as claimed in any one of the preceding claims, **characterized in that** the power source (220) is a current source.

4. The device (20) as claimed in any one of the preceding claims, **characterized in that** it comprises a resistive element (216) electrically in parallel with the stimulation head (210) and, in the charging state, in series with the capacitive element (205).

5. The device (20) as claimed in claim 4, **characterized in that** the resistive element (216) has a resistance at least two times higher than a theoretical value $R_F$ of the resistance of the fluid separating the first electrode (211) from the second electrode (212).

6. The device (20) as claimed in any one of claims 4 to 5, **characterized in that** the power source (220) being a current source of intensity $I_C$ and the transition from the charging state to the discharging state being carried out when the voltage between the first terminal of the capacitive element (205) and the second electrode (212) of the stimulation head (210) reaches a predefined upper limit value $V_0$, the resistive element (216) is of resistance $R_S$ such that the voltage $R_S \cdot I_C$ is less than $V_0$.

7. The device (10) as claimed in any one of the preceding claims, **characterized in that** the switch (206) arranged between the first terminal of the capacitive element (205) and the second electrode (212) is a spark gap.

8. The device (20) as claimed in any one of the preceding claims, **characterized in that** the tool (200) is formed by a plurality of sections assembled end to end in a reversible manner.

9. A diagnostic method of an electric well stimulation device (20) as claimed in any one of the preceding claims, **characterized in that** it comprises the following steps:

> - determination of a parameter representative of the resistance of the stimulation head (210) when the tool (200) is in the charging state wherein, the capacitive element (205) and the stimulation head (210) being electrically connected in series, the power source (220) charges the capacitive element (205) through said stimulation head (210),
> - determination of a state of the stimulation head (210) according to said parameter.

10. The method as claimed in claim 9, **characterized in that** the determination of the parameter corresponds to a measurement of the power supplied by the power source (220) and/or a measurement of the time required to obtain a voltage of predefined value between the first terminal of the capacitive element (205) and the second electrode (212) of the stimulation head (210).

**Fig.1**

**Fig.2**

**Fig.3**

**Fig.4**

**Fig.5**

**RÉFÉRENCES CITÉES DANS LA DESCRIPTION**

**Documents brevets cités dans la description**

- US 4345650 A
- EP 2426311 A
- WO 9013830 A
- US 4479680 A